# EUROPÄISCHE PATENTSCHRIFT

(11) **EP 2 269 282 B1**
(45) Veröffentlichungstag und Bekanntmachung des Hinweises auf die Patenterteilung: **11.04.2018**
(21) Anmeldenummer: 09733418.9
(22) Anmeldetag: 11.02.2009
(51) Int. Cl.: H02J 9/06

(54) **NOTENERGIEVERSORGUNGSVORRICHTUNG FÜR EIN HYBRIDFAHRZEUG**
EMERGENCY POWER SUPPLY DEVICE FOR A HYBRID VEHICLE
DISPOSITIF D'ALIMENTATION DE SECOURS EN ÉNERGIE POUR UN VÉHICULE HYBRIDE

(30) Priorität: 14.04.2008 DE 102008001145
(43) Veröffentlichungstag der Anmeldung: 05.01.2011
(73) Patentinhaber: Robert Bosch GmbH, 70442 Stuttgart (DE)
(72) Erfinder: WAGNER, Arndt, 71735 Eberdingen (DE)
(86) Internationale Anmeldenummer: PCT/EP2009/051528
(87) Internationale Veröffentlichungsnummer: WO 2009/127451

(56) Entgegenhaltungen:
- WO-A-2004/034543
- WO-A-2004/070911
- DE-A1- 10 160 266
- GB-A- 2 132 803
- US-A- 5 959 369

## Beschreibung

### Technisches Gebiet

Die vorliegende Erfindung betrifft das Gebiet der Energieversorgung in Hybridfahrzeugen.

### Stand der Technik

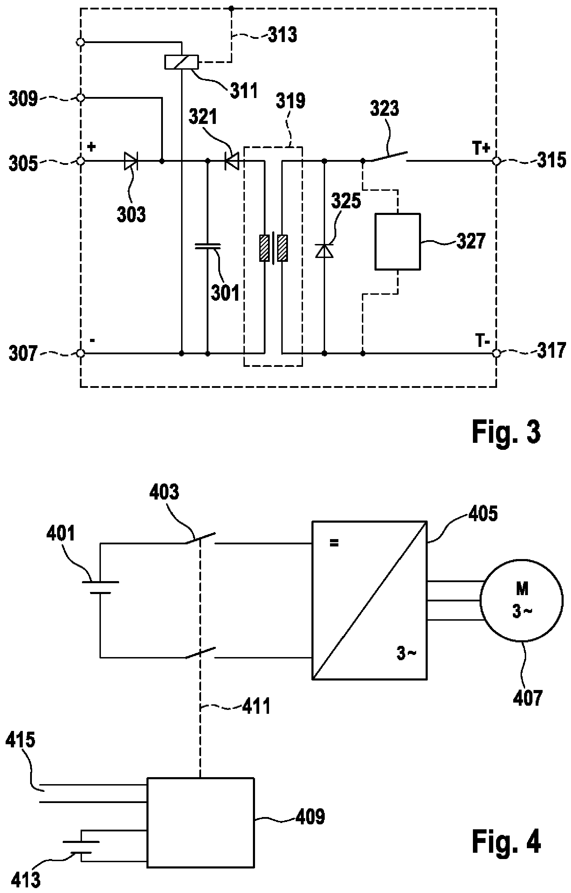

Heutige Hybridfahrzeuge sind üblicherweise mit einem Verbrennungsantrieb und einem elektrischen Antrieb ausgestattet, der, wie in Fig. 4 dargestellt, durch eine Hochspannungsbatterie 401 mit einer Spannung von beispielsweise 300 V versorgt wird. Die Hochspannungsbatterie 401 ist über eine Schalteranordnung 403 mit einem Wechselrichter 405 verbunden, der eine dreiphasige Wechselspannung für einen Elektromotor 407 erzeugt. Die Schaltergruppe 403 wird beispielsweise durch ein Hauptschütz 409 vor dem Start des Elektromotors 407 zugeschaltet. Das Hauptschütz 409 ist beispielsweise mechanisch mithilfe einer mechanischen Kopplung 411 mit der Schaltergruppe 403 gekoppelt und bezieht die Energie zum Betätigen derselben aus einer Niedervoltbatterie 413 mit 12 V Gleichspannung. Ferner sind Steueranschlüsse 415 vorgesehen, die beispielsweise mit einem Fahrzeugstartknopf verbunden sind, so dass ein Startvorgang des Fahrzeugs auch das Schließen der Schaltergruppe 403 initiiert.

Ist die Niedervoltbatterie 413 jedoch entladen, so kann die Schaltergruppe 403 nicht geschlossen werden, so dass die Hochspannungsbatterie 401 nicht mit dem Wechselrichter 405 verbunden und der Elektromotor folglich nicht gestartet werden kann. Darüber hinaus ist trotz der vorhandenen Hochspannungsbatterie 401 bei Ausfall der Niedervoltbatterie 413 die Bordnetzversorgung mit 12 V Gleichspannung nicht gewährleistet, so dass neben dem Elektromotor auch weitere Fahrzeugsysteme nicht mit elektrischer Energie versorgt werden können.

In der Schrift WO 2007/115919 A1 ist ein Hybridantrieb offenbart, wobei eine Bordnetzbatterie zum Starten eines Elektromotors bei entladener Hochspannungsbatterie eingesetzt wird. Ist auch die Bordnetzbatterie entladen, so wird der Startvorgang mithilfe eines Starthilfekabels und einer Spenderbatterie durchgeführt.

In der Schrift WO 2004/070911 A1 ist ein Zweispannungsbordnetz offenbart, wobei sicherheitsrelevante Komponenten über drei Sicherheitsschalter alternativ von einem Starter-Generator, von einem Doppelschichtkondensator, von einem ersten oder einem zweiten Energiespeicher versorgt werden können.

In der Schrift WO 2004/034543 A1 ist ein Verfahren und eine Vorrichtung zum strom- und spannungslosen Einschalten eines Leistungsschalters offenbart.

In der Schrift DE 101 60 266 A1 ist ein Fahrzeug mit zwei Teilbordnetzen offenbart, wobei bei Motorstillstand die Spannungsniveaus der Teilbordnetze auf einen einheitlichen Wert abgesenkt werden.

In der Schrift GB 2 132 803 A ist ein Beleuchtungssteuerungsgerät für ein Fahrzeug offenbart, welches Umschalter für den Wechsel zwischen Abblendlicht und Parklicht ansteuert.

In der Schrift US 5 959 369 A ist ein batteriebetriebenes Gerät offenbart, wobei das Gerät eine Ladespannung empfängt, welche mittels einer Schaltung an die Ladebedingungen angepasst wird.

Es ist die Aufgabe der vorliegenden Erfindung, ein effizientes Notenergieversorgungskonzept für Hybridfahrzeuge insbesondere bei entladener Niedervoltbatterie zu schaffen.

Diese Aufgabe wird durch die Merkmale der unabhängigen Ansprüche gelöst. Vorteilhafte Weiterbildungsformen sind in den abhängigen Ansprüchen wiedergegeben.

### Offenbarung der Erfindung

Die Erfindung basiert auf der Erkenntnis, dass ein effizientes Notenergieversorgungskonzept für Hybridfahrzeuge durch das Vorsehen eines weiteren Energiespeichers, der durch eine Hochvoltbatterie und/oder durch eine Niedervoltbatterie, beispielsweise eine Bordnetzbatterie des Hybridfahrzeugs, geladen werden kann und bei Bedarf die Notenergieversorgung bereitstellt, realisiert werden kann.

Die Erfindung betrifft eine Notenergieversorgungsvorrichtung für ein Hybridfahrzeug mit den Merkmalen des Anspruchs 1.

Gemäß einer Ausführungsform umfasst der Energiespeicher einen Kondensator.

Gemäß einer Ausführungsform ist der Energiespeicher mit der Hochvoltbatterie über einen Spannungsumsetzer, beispielsweise einen Spannungsteiler oder einen Transformator, elektrisch koppelbar.

Gemäß einer Ausführungsform ist der Energiespeicher parallel zu der Niedervoltbatterie schaltbar und mit dieser verbindbar.

Gemäß einer Ausführungsform ist die Hochvoltbatterie mit dem elektrischen Antrieb über zumindest einen Schalter verbindbar, wobei der Energiespeicher vorgesehen ist, elektrische Energie zum Schließen des zumindest einen Schalters insbesondere bei Ausfall der Niedervoltbatterie bereitzustellen.

Gemäß einer Ausführungsform ist die Notenergieversorgungsvorrichtung ausgebildet, den Energiespeicher mit der Hochvoltbatterie und/oder mit der Niedervoltbatterie ansprechend auf ein Steuersignal elektrisch zu koppeln.

Gemäß einer Ausführungsform umfasst die Notenergieversorgungsvorrichtung ferner einen Spannungsumsetzer, insbesondere einen Spannungsteiler oder einen Transformator, eine erste Diode, deren Kathode mit einem Anschluss des Energiespeichers verbunden und deren Anode mit der Niedervoltbatterie elektrisch koppelbar ist, eine zweite Diode, deren Kathode mit dem Anschluss des Energiespeichers verbunden und deren Anode mit einem Ausgangsanschluss des Spannungsumsetzers gekoppelt ist und einen steuerbarem Schalter, der mit einem Eingangsanschluss des Spannungsumsetzers elektrisch gekoppelt und vorgesehen ist, den Spannungsumsetzer schaltbar mit der Hochvoltbatterie elektrisch zu verbinden bzw. zu koppeln.

Gemäß einer Ausführungsform umfasst die Notenergieversorgungsvorrichtung ferner ein steuerbares Schaltelement mit beispielsweise einem Relais oder einer Schützspule, wobei das Schaltelement durch den Energiespeicher mit elektrischer Energie beaufschlagbar ist.

Gemäß einem Aspekt betrifft die Erfindung ein für ein Hybridfahrzeug mit einem elektrischen Hybridantrieb. Das Energieversorgungssystem umfasst eine Hochvoltbatterie zum Versorgen des elektrischen Hybridantriebs mit elektrischer Energie, eine Niedervoltbatterie, insbesondere einer Boardnetzbatterie, und die Notenergieversorgungsvorrichtung, die vorgesehen ist, bei Ausfall der Niedervoltbatterie elektrische Energie zum Schließen zumindest eines Schalters zum Verbinden der Hochvoltbatterie mit dem elektrischen Antrieb bereitzustellen.

Gemäß einem Aspekt betrifft die Erfindung ein Verfahren zur Notenergieversorgung in einem Hybridfahrzeug, mit den Merkmalen des Anspruchs 9.

### Zeichnungen

Weitere Ausführungsbeispiele werden Bezug nehmend auf die beiliegenden Zeichnungen näher erläutert. Es zeigen:
Fig. 1 eine Notenergieversorgungsvorrichtung;
Fig. 2 eine Notenergieversorgungsvorrichtung;
Fig. 3 eine Notenergieversorgungsvorrichtung; und
Fig. 4 ein elektrisches Energieversorgungskonzept in einem Hybridfahrzeug.

### Beschreibung der Ausführungsformen

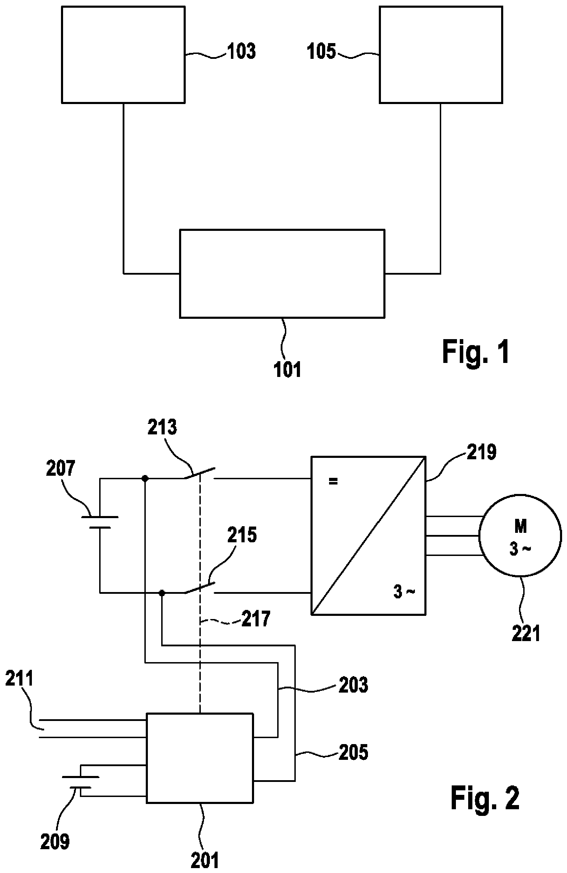

Fig. 1 zeigt eine Notenergieversorgungsvorrichtung für ein Hybridfahrzeug, die einen Energiespeicher 101, der mit einer Hochvoltbatterie 103 und/oder mit einer Niedervoltbatterie 105, beispielsweise einer Bordnetzbatterie mit 12 V Spannung, verbindbar ist. Der Energiespeicher 101 wird bei Betrieb durch die Hochvoltbatterie 103 und/oder durch die Niedervoltbatterie 105 mit elektrischer Energie geladen und stellt diese beispielsweise bei Ausfall der Niedervoltbatterie 105 bereit.

Gemäß einer Ausführungsform sind die Hochvoltbatterie 103 und/oder die Niedervoltbatterie 105 Elemente der Notenergieversorgungsvorrichtung. Gemäß einer weiteren Ausführungsform sind die Hochspannungsbatterie 103 und/oder die Niedervoltbatterie 105 Elemente des Hybridfahrzeugs oder Elemente eines elektrischen Energieversorgungssystems.

Die Notenergieversorgungsvorrichtung kann beispielsweise in einem Hauptschütz bzw. in einer Hauptschützsteuergruppe angeordnet sein, so dass durch eine geeignete Zusatzbeschaltung der Hauptschützsteuergruppe ein Hybridantriebssystem auch dann gestartet werden kann, wenn die Niedervoltbatterie 105 entladen ist. In diesem Fall kann die Notenergieversorgungsvorrichtung auch zum Schalten der Hauptschützkontakte, die die Hochvoltbatterie mit einem Wechselrichter oder einem Elektromotor des Hybridfahrzeugs verbinden, eingesetzt werden.

Der Energiespeicher 101 kann beispielsweise durch eine Kapazität, beispielsweise durch einen Doppelschichtkondensator, realisiert sein, die aus der Niedervoltbatterie 105, die beispielsweise 12 V bereitstellt, und/oder aus der Hochvoltbatterie 103, die beispielsweise 300 V bereitstellt, geladen wird. Gemäß einer Ausführungsform ist die Notenergieversorgungsvorrichtung derart beschaffen, dass eine Potentialtrennung zwischen dem Hochspannungspotential der Hochspannungsbatterie 103 und dem 12 V Potential des Bordnetzes gewährleistet ist.

Fig. 2 verdeutlicht das erfindungsgemäße Notenergieversorgungskonzept bei einer Anordnung der Notenergieversorgungsvorrichtung in einem Hauptschütz 201. Das Hauptschütz 201 ist im Unterschied zu dem in Fig. 4 dargestellten Ausführungsbeispiel mit ausgeführten Kontakten 203 und 205 versehen, die jeweils mit Anschlüssen einer Hochvoltbatterie 207 und parallel zu dieser verbunden sind. Ferner ist eine Niedervoltbatterie 209 vorgesehen, die mit dem Hauptschütz 201 verbunden ist und die beispielsweise 12 V Bordnetzspannung liefert. Darüber hinaus sind Steuerkontakte 211 vorgesehen, die beispielsweise mit einem Startknopf oder mit einer Zündvorrichtung eines Hybridfahrzeugs verbindbar sind, so dass beim Start desselben die Steuerkontakte beispielsweise überbrückt werden, sodass die Niedervoltbatterie 209 und/oder die in dem Hauptschütz 201 zusätzlich angeordnete Notenergieversorgungsvorrichtung die zum Schließen der Schalter 213 und 215 unter Verwendung eines mechanischen Kontakts 217 benötigte elektrische Energie bereitstellen können. Die Schalter 213 und 215 verbinden die Hochvoltbatterie 207 mit einem Wechselrichter 219, der beispielsweise die durch die Hochvoltbatterie 207 bereitgestellte Spannung in eine dreiphasige Spannung umsetzt und diese einem Elektromotor 221 des Hybridfahrzeugs zuführt.

Wie in Fig. 2 dargestellt ist das Hauptschütz bzw. die Hauptschützgruppe 201 durch die äußere Beschaltung zwecks weiterer Energieversorgung zusätzlich mit der Hochspannungsbatterie 207 und somit mit der Hochspannungsseite des Hybridfahrzeugs verbunden. Das Hauptschütz 201 kann beispielsweise mit der Notenergieversorgungsvorrichtung einen aufladbaren Energiespeicher aufweisen, der beispielsweise durch die Hochspannungsbatterie 207 aufgeladen werden kann und der beispielsweise bei Ausfall der Niedervoltbatterie 209, die üblicherweise zum Schließen der Schalter 213 und 215 herangezogen wird, die hierfür notwendige Notenergieversorgung bereitstellt. Damit kann der Elektromotor 221 auch bei Ausfall der Niedervoltbatterie 209 gestartet werden. Die Schalter 213 und 215 sind beispielsweise als Schutzkontakte ausgeführt, die beispielsweise bei Anlegen eines Steuersignals an den Steueranschlüssen 211 beispielsweise über eine interne Beschaltung angeschaltet werden, woraufhin der Elektromotor 221 gestartet werden kann. Darüber hinaus kann ein DC/DC-Wandler (DC: Direct Current) vorgesehen sein, der beispielsweise mit der Hochvoltbatterie 207 verbunden ist und die Niedervoltseite des Hybridfahrzeugs mit Energie versorgt.

Fig. 3 zeigt eine Notenergieversorgungsvorrichtung mit einem Energiespeicher 301, einer ersten Diode 303, die in Flussrichtung zwischen einem ersten Anschluss 305 der Notenergieversorgungsvorrichtung und einem Anschluss des Energiespeichers 301, beispielsweise eines Kondensators, verbunden ist. Der Energiespeicher 301 ist mit seinem zweiten Anschluss mit einem zweiten Anschluss 307 der Notenergieversorgungsvorrichtung verbunden. Die Anschlüsse 305 und 307 sind beispielsweise für eine elektrische Verbindung mit einer Niedervoltbatterie vorgesehen. Die Kathode der ersten Diode 303 sowie der zweite Anschluss 307 der Notenergieversorgungsvorrichtung sind mit Steueranschlüssen 309 gekoppelt, wobei zwischen einem der Anschlüsse 309 und dem zweiten Anschluss 307 der Notenergieversorgungsvorrichtung eine Schalteinrichtung 311, beispielsweise ein Relais, angeordnet ist. Die Schalteinrichtung 311 ist vorgesehen, über eine beispielsweise mechanische Verbindung 313 beispielsweise die in Fig. 2 dargestellten Schalter 213 und 215 anzusteuern und diese zu schließen.

Die Notenergieversorgungsvorrichtung umfasst ferner einen dritten Anschluss 315 und einen vierten Anschluss 317, die beispielsweise mit einer Hochvoltbatterie verbindbar sind. Ferner ist ein Spannungsumsetzer 319 vorgesehen, der beispielsweise ein Transformator sein kann. Zwischen einem Ausgangsanschluss des Spannungsumsetzers 319 und dem Anschluss des Energiespeichers 301, der mit der ersten Diode 303 verbunden ist, ist eine zweite Diode 321 in Flussrichtung angeordnet.

Der dritte Anschluss 315 ist beispielsweise mittels eines Schalters 323 mit einem Eingangsanschluss des Spannungsumsetzers 319 gekoppelt, wobei zwischen dem vierten Anschluss 317 der Notenergieversorgungsvorrichtung und einem dem dritten Anschluss 315 zugeordneten Anschluss des Spannungsumsetzers 319 in Flussrichtung eine dritte Diode 325 angeordnet sein kann.

Umfasst der Spannungsumsetzer 319 einen Transformator, so ist optional ein Gleichspannungs-Wechselspannungsumsetzer 327 angeordnet, beispielsweise ein Zerhacker, der vorgesehen ist, die von der Hochvoltbatterie stammende Gleichspannung in Wechselspannung umzuwandeln, die zu dem Energiespeicher 301 hin übertragen werden soll. Die zweite Diode 321 sorgt dafür, dass dem Energiespeicher 301 ausschließlich Gleichspannungsanteile zugeführt werden.

Im Betrieb sind der erste Anschluss 305 beispielsweise mit einem positiven Potential der Niedervoltbatterie und der zweite Anschluss 307 mit einem negativen Potential der Niedervoltbatterie oder mit Masse verbindbar. Der dritte Anschluss 315 ist beispielsweise mit dem positiven Anschluss der Traktionsnetzversorgung (T+), beispielsweise mit dem positiven Anschluss der Hochvoltbatterie, verbindbar. Der vierte Anschluss 317 ist hingegen mit einem negativen Potential der Traktionsenergieversorgung (T-), beispielsweise mit einem negativen Potential der Hochvoltbatterie, verbindbar. Die Anschlüsse 305 und 307 sind bevorzugt von den Anschlüssen 315 und 317 galvanisch getrennt.

Die in Fig. 3 dargestellte Notenergieversorgungsvorrichtung kann beispielsweise in der in Fig. 2 dargestellten Hauptschützgruppe 201 angeordnet sein, wobei die Anschlüsse 309 beispielsweise den in Fig. 2 dargestellten Anschlüssen 211 entsprechen. Der Energiespeicher 301 wird im Normalbetrieb beispielsweise aus dem Bordnetz bzw. aus der in Fig. 2 dargestellten 12V Batterie 209 geladen und hält die Ladung auch bei Ausfall der Niedervoltbatterie 209 aufrecht, weil die erste Diode 303 eine Entladung des Energiespeichers 301 in Richtung der 12 V Batterie verhindert. Auf diese Weise lässt sich die Betriebssicherheit des Systems erhöhen. Bei einem langen Stillstand des Hybridfahrzeugs kann der Energiespeicher 301 sich jedoch entladen. Die Wiederaufladung kann beispielsweise unter Verwendung der Hochvoltbatterie erfolgen.

Durch das Vorsehen des Spannungsumsetzers 319, der zweiten Diode 321, des Schalters 323 sowie der dritten Diode 325 kann das Hybridsystem unabhängig von dem 12V Bordnetz sowie unabhängig von einer Fahrzeugstillstanddauer unter der Voraussetzung, dass die in Fig. 3 nicht dargestellte Hochvoltbatterie einen entsprechenden Ladezustand aufweist, starten. Der Ladezustand der Hochvoltbatterie ist dann entsprechend, wenn eine derartige Aufladung des Energiespeichers 301 möglich ist, dass dieser die Schalteinrichtung 311 derart mit elektrischer Energie versorgen kann, dass beispielsweise die in Fig. 2 dargestellten Kontakte 213 und 215 geschlossen werden können. Durch die in Fig. 3 dargestellte Beschaltung der Notenergieversorgungsvorrichtung wird somit sichergestellt, dass am Energiespeicher 301 eine Spannung anliegt, die ausreichend hoch ist, um die Schalteinrichtung, die beispielsweise eine Schutzspule umfasst, beispielsweise zu bestromen, wenn die Kontakte 309 beispielsweise mittels eines Schalters überbrückt werden.

Beispielsweise formen der Schalter 323, die dritte Diode 325 sowie der Spannungsumsetzer 319 einen Tiefsetzsteller mit einer Potentialtrennung, wobei der Schalter 323 beispielsweise ein Halbleiterschalter ist, der taktend betrieben werden kann. Ein derartiger Tiefsetzsteller kann beispielsweise nur im Bedarfsfall, z.B. durch eine separate Aktivierung durch einen Fahrer, aktiviert werden, so dass die beispielsweise in Fig. 2 dargestellte Hochvoltbatterie 207 nicht dauernd belastet wird.

Gemäß einer optionalen Ausführungsform kann die in Fig. 3 dargestellte Notenergieversorgungsvorrichtung auch in dem in Fig. 4 dargestellten Hauptschütz 409 angeordnet sein. In diesem Fall kann auf die zusätzliche Beschaltung der Hochspannungsseite mit dem Spannungsumsetzer 319, der zweiten Diode 321 sowie den weiteren Elementen der Hochspannungsseite verzichtet werden, weil die Aufladung des Energiespeichers 301 mittels der Niedervoltbatterie 413 erfolgen kann.

## Patentansprüche

1. Notenergieversorgungsvorrichtung zum Bereitstellen von Notenergieversorgung für ein Hybridfahrzeug, das eine Hochvoltbatterie zum Antreiben eines elektrischen Antriebs und eine Niedervoltbatterie aufweist, mit:
einem Energiespeicher (101, 301), der zum Laden mit der Hochvoltbatterie und/oder mit der Nieder
voltbatterie elektrisch koppelbar und vorgesehen ist, die Notenergieversorgung bereitzustellen, wobei die Hochvoltbatterie mit dem elektrischen Antrieb über Hauptschützkontakte verbindbar ist, **dadurch gekennzeichnet, dass** der Energiespeicher (101, 301) vorgesehen ist, elektrische Energie zum Schließen der Hauptschützkontakte bei Ausfall der Niedervoltbatterie beim Starten des elektrischen Antriebs bereitzustellen, wobei die Notenergieversorgungsvorrichtung eingerichtet ist zur Anordnung in einem Hauptschütz oder in einer Hauptschützsteuergruppe und zum Schalten der Hauptschützkontakte, die die Hochvoltbatterie mit einem Wechselrichter oder einem Elektromotor des Hybridfahrzeugs verbinden.

2. Notenergieversorgungsvorrichtung gemäß Anspruch 1, wobei der Energiespeicher (101, 301) einen Kondensator umfasst.

3. Notenergieversorgungsvorrichtung gemäß einem der vorhergehenden Ansprüche, wobei der Energiespeicher (101, 301) mit der Hochvoltbatterie über einen Spannungsumsetzer (319), insbesondere einen Spannungsteiler oder einen Transformator, elektrisch koppelbar ist.

4. Notenergieversorgungsvorrichtung gemäß einem der vorhergehenden Ansprüche, wobei der Energiespeicher (101, 301) parallel zu der Niedervoltbatterie schaltbar ist.

5. Notenergieversorgungsvorrichtung gemäß einem der vorhergehenden Ansprüche, die ausgebildet ist, den Energiespeicher (101, 301) mit der Hochvoltbatterie und/oder mit der Niedervoltbatterie ansprechend auf ein Steuersignal elektrisch zu koppeln.

6. Notenergieversorgungsvorrichtung gemäß einem der vorhergehenden Ansprüche, die ferner folgende Merkmale umfasst:
einen Spannungsumsetzer (319), insbesondere einen Spannungsteiler oder einen Transformator;
eine erste Diode (303), deren Kathode mit einem Anschluss des Energiespeichers (301) verbunden und deren Anode mit der Niedervoltbatterie elektrisch koppelbar ist;
eine zweite Diode (321), deren Kathode mit dem Anschluss des Energiespeichers (301) verbunden und deren Anode mit einem Ausgangsanschluss (319) des Spannungsumsetzers gekoppelt ist; und
einem steuerbarem Schalter (323), der mit einem Eingangsanschluss des Spannungsumsetzers (319) elektrisch gekoppelt und der mit der Hochvoltbatterie elektrisch koppelbar ist.

7. Notenergieversorgungsvorrichtung gemäß einem der vorhergehenden Ansprüche, die ferner ein steuerbares Schaltelement (311), insbesondere ein Relais, das durch den Energiespeicher (101, 301) mit elektrischer Energie versorgbar ist, umfasst.

8. Energieversorgungssystem für ein Hybridfahrzeug mit einem elektrischen Hybridantrieb, mit:
einer Hochvoltbatterie zum Versorgen des elektrischen Hybridantriebs mit elektrischer Energie;
einer Niedervoltbatterie, insbesondere einer Bordnetzbatterie; und
der Notenergieversorgungsvorrichtung gemäß einem der Ansprüche 1 bis 7, die vorgesehen ist, bei Ausfall der Niedervoltbatterie elektrische Energie zum Schließen von Hauptschützkontakten zum Verbinden der Hochvoltbatterie mit dem elektrischen Antrieb bereitzustellen, wobei die Notenergieversorgungsvorrichtung in einem Hauptschütz oder in einer Hauptschützsteuergruppe angeordnet und eingerichtet ist zum Schalten der Hauptschützkontakte, die die Hochvoltbatterie mit einem Wechselrichter oder einem Elektromotor des Hybridfahrzeugs verbinden.

9. Verfahren zum Bereitstellen von Notenenergieversorgung in einem Hybridfahrzeug, das eine Hochvoltbatterie zum Antreiben eines elektrischen Antriebs und eine Niedervoltbatterie aufweist, mit:
Koppeln des Energiespeichers mit der Hochvoltbatterie und/oder mit der Niedervoltbatterie, um den Energiespeicher zu laden;
Bereitstellen der Notenergieversorgung durch den Energiespeicher bei Ausfall der der Niedervoltbatterie; und
Bereitstellen elektrischer Energie zum Schließen von Hauptschützkontakten zum Verbinden der Hochvoltbatterie mit dem elektrischen Antrieb durch den Energiespeicher bei Ausfall der Niedervoltbatterie beim Starten des elektrischen Antriebs.

## Claims

1. Emergency power supply apparatus for providing emergency power supply for a hybrid vehicle which has a high-voltage battery for driving an electric drive and has a low-voltage battery, comprising: an energy store (101, 301) which can be electrically coupled to the high-voltage battery and/or to the low-voltage battery for charging purposes and is intended to provide the emergency power supply, wherein the high-voltage battery can be connected to the electric drive by means of main contactor contacts, **characterized in that** the energy store (101, 301) is intended to provide electrical power for closing the main contactor contacts in the event of failure of the low-voltage battery when starting the electric drive, wherein the emergency power supply apparatus is designed to be arranged in a main contactor or in a main contactor control group and for the purpose of switching the main contactor contacts which connect the high-voltage battery to an inverter or to an electric motor of the hybrid vehicle.

2. Emergency power supply apparatus according to Claim 1, wherein the energy store (101, 301) comprises a capacitor.

3. Emergency power supply apparatus according to either of the preceding claims, wherein the energy store (101, 301) can be electrically coupled to the high-voltage battery by means of a voltage converter (319), in particular a voltage divider or a transformer.

4. Emergency power supply apparatus according to one of the preceding claims, wherein the energy store (101, 301) can be connected in parallel with the low-voltage battery.

5. Emergency power supply apparatus according to one of the preceding claims, which is designed to electrically couple the energy store (101, 301) to the high-voltage battery and/or to the low-voltage battery in response to a control signal.

6. Emergency power supply apparatus according to one of the preceding claims, which further comprises the following features:
a voltage converter (319), in particular a voltage divider or a transformer;
a first diode (303), the cathode of which is connected to a connection of the energy store (301) and the anode of which can be electrically coupled to the low-voltage battery;
a second diode (321), the cathode of which is connected to the connection of the energy store (301) and the anode of which is coupled to an output connection (319) of the voltage converter; and
a controllable switch (323) which is electrically coupled to an input connection of the voltage converter (319) and which can be electrically coupled to the high-voltage battery.

7. Emergency power supply apparatus according to one of the preceding claims, which further comprises a controllable switching element (311), in particular a relay, which can be supplied with electrical power by way of the energy store (101, 301).

8. Power supply system for a hybrid vehicle having an electric hybrid drive, comprising:
a high-voltage battery for supplying electrical power to the electric hybrid drive;
a low-voltage battery, in particular an on-board electrical system battery; and
the emergency power supply apparatus according to one of Claims 1 to 7 which is intended to provide electrical energy for closing main contactor contacts for connecting the high-voltage battery to the electric drive in the event of failure of the low-voltage battery, wherein the emergency power supply apparatus is arranged in a main contactor or in a main contactor control group and is designed to switch the main contactor contacts which connect the high-voltage battery to an inverter or an electric motor of the hybrid vehicle.

9. Method for providing emergency power supply in a hybrid vehicle which has a high-voltage battery for driving an electric drive and has a low-voltage battery, comprising:
coupling the energy store to the high-voltage battery and/or to the low-voltage battery in order to charge the energy store;
providing the emergency power supply by way of the energy store in the event of failure of the low-voltage battery; and
providing electrical power for closing main contactor contacts for connecting the high-voltage battery to the electric drive by way of the energy store in the event of failure of the low-voltage battery when starting the electric drive.

## Revendications

1. Dispositif d'alimentation en énergie de secours destiné à fournir une alimentation en énergie de secours pour un véhicule hybride qui possède une batterie à haute tension pour l'entraînement d'un mécanisme d'entraînement électrique et une batterie à basse tension, comportant :
un accumulateur d'énergie (101, 301) qui peut être couplé électriquement pour sa charge à la batterie à haute tension et/ou à la batterie à basse tension et qui est prévu pour fournir l'alimentation en énergie de secours, dans lequel la batterie à haute tension peut être reliée à l'entraînement électrique par l'intermédiaire de contacteurs principaux, **caractérisé en ce que** l'accumulateur d'énergie (101, 301) est prévu pour fournir de l'énergie électrique destinée à fermer les contacteurs principaux en cas de panne de la batterie à basse tension lors du démarrage de l'entraînement électrique, dans lequel le dispositif d'alimentation en énergie de secours est conçu pour être disposé dans un contacteur principal ou dans un groupe de commande de contacteur principal et pour connecter les contacteurs principaux qui relient la batterie à haute tension à un onduleur ou à un moteur électrique du véhicule hybride.

2. Dispositif d'alimentation en énergie de secours selon la revendication 1, dans lequel l'accumulateur d'énergie (101, 301) comprend un condensateur.

3. Dispositif d'alimentation en énergie de secours selon l'une quelconque des revendications précédentes, dans lequel l'accumulateur d'énergie (101, 301) peut être couplé électriquement à la batterie à haute tension par l'intermédiaire d'un convertisseur de tension (319), en particulier un diviseur de tension ou un transformateur.

4. Dispositif d'alimentation en énergie de secours selon l'une quelconque des revendications précédentes, dans lequel l'accumulateur d'énergie (101, 301) peut être connecté en parallèle à la batterie à basse tension.

5. Dispositif d'alimentation en énergie de secours selon l'une quelconque des revendications précédentes, qui est conçu pour coupler électriquement l'accumulateur d'énergie (101, 301) à la batterie à haute tension et/ou à la batterie à basse tension en réponse à un signal de commande.

6. Dispositif d'alimentation en énergie de secours selon l'une quelconque des revendications précédentes, comprenant en outre les éléments caractéristiques suivants :
un convertisseur de tension (319), en particulier un diviseur de tension ou un transformateur ;
une première diode (303) dont la cathode est reliée à une borne de l'accumulateur d'énergie (301) et dont l'anode peut être couplée électriquement à la batterie à basse tension ;
une deuxième diode (321) dont la cathode est reliée à la borne de l'accumulateur d'énergie (301) et dont l'anode est couplée à une borne de sortie (319) du convertisseur de tension ; et
un commutateur commandable (323) qui est couplé électriquement à une borne d'entrée du convertisseur de tension (319) et qui peut être couplé électriquement à la batterie à haute tension.

7. Dispositif d'alimentation en énergie de secours selon l'une quelconque des revendications précédentes, comprenant en outre un élément de commutation commandable (311), en particulier un relais, qui peut être alimenté en énergie électrique par l'accumulateur d'énergie (101, 301) .

8. Système d'alimentation en énergie pour un véhicule hybride muni d'un mécanisme d'entraînement hybride électrique, comportant :
une batterie à haute tension destinée à alimenter en énergie électrique le mécanisme d'entraînement hybride électrique ;
une batterie à basse tension, en particulier une batterie de réseau de bord ; et
le dispositif d'alimentation en énergie de secours selon l'une quelconque des revendications 1 à 7, qui est prévu, en cas de panne de la batterie à basse tension, pour fournir de l'énergie électrique destinée à fermer des contacteurs principaux afin de relier la batterie à haute tension au mécanisme d'entraînement électrique, dans lequel le dispositif d'alimentation en énergie de secours est disposé dans un contacteur principal ou dans un groupe de commande de contacteur principal et est conçu pour connecter les contacteurs principaux qui relient la batterie à haute tension à un onduleur ou à un moteur électrique du véhicule hybride.

9. Procédé pour la fourniture d'une alimentation en énergie de secours dans un véhicule hybride, qui comporte une batterie à haute tension destinée à entraîner un mécanisme d'entraînement électrique et une batterie à basse tension, consistant à :
coupler l'accumulateur d'énergie à la batterie à haute tension et/ou à la batterie à basse tension afin de charger l'accumulateur d'énergie ;
fournir l'alimentation en énergie de secours par l'intermédiaire de l'accumulateur d'énergie en cas de panne de la batterie à basse tension ; et
fournir de l'énergie électrique pour fermer des contacteurs principaux afin de relier la batterie à haute tension au mécanisme d'entraînement électrique par l'intermédiaire de l'accumulateur d'énergie en cas de panne de la batterie à basse tension lors du démarrage du mécanisme d'entraînement électrique.
